Europäisches Patentamt

European Patent Office

Office européen des brevets

(11) Veröffentlichungsnummer: **0 329 230**

**A1**

(12) **EUROPÄISCHE PATENTANMELDUNG**

(21) Anmeldenummer: **89200304.7**

(22) Anmeldetag: **09.02.89**

(51) Int. Cl.4: **G11B 23/03 , G11B 17/22**

(30) Priorität: **15.02.88 NL 8800360**

(43) Veröffentlichungstag der Anmeldung:
**23.08.89 Patentblatt 89/34**

(84) Benannte Vertragsstaaten:
**BE CH DE ES FR GB LI**

(71) Anmelder: **N.V. Philips' Gloeilampenfabrieken**
**Groenewoudseweg 1**
**NL-5621 BA Eindhoven(NL)**

(72) Erfinder: **Borgions, Willem Joris**
**p/A Int. Octrooibureau B.V. Prof-Holstlaan 6**
**NL-5656 AA Eindhoven(NL)**

(74) Vertreter: **Schrijnemaekers, Hubert Joannes**
**Maria et al**
**Internationaal Octrooibureau B.V. Prof.**
**Holstlaan 6**
**NL-5656 AA Eindhoven(NL)**

(54) Kassette zum Aufbewahren mehrer scheibenförmiger Platten, insbesondere optischer Platten.

(57) Kassette zum Aufbewahren mehrerer scheiben-förmiger Platten, insbesondere CD-Singles, wobei diese Kassette ein Gehäuse (1) aufweist mit einer Anzahl übereinander angeordneter plattenförmiger Tragkörper (3). Die Tragkörper sind mit je einer Auflagefläche (5) zum Auflegen einer der genannten Platten versehen und sind ausserdem zum Führen der Platten in das Gehäuse oder aus demselben heraus je um eine Schwenkachse (11) einzeln schwenkbar. Das Gehäuse ist mit Seitenwänden (19, 21) sowie mit sich parallel zu den genannten Aufla-geflächen erstreckenden soliden Trennwänden (37, 47) zum Führen und Unterstützen der Tragkörper versehen. Mindestens eine der Seitenwände (19) ist mit einem einwärts vorspringenden Wandteil (35) versehen, der dazu dient, die Abmessungen der Trennwände (37) möglichst klein zu halten bei den gegebenen Aussenabmessungen des Gehäuses.

FIG. 2

## Kassette zum Aufbewahren mehrerer scheibenförmiger Platten, insbesondere optischer Platten

Die Erfindung bezieht sich auf eine Kassette zum Aufbewahren mehrerer scheibenförmiger Platten, insbesondere optischer Platten, mit einem Gehäuse mit übereinander angeordneten plattenförmigen Tragkörpern, die mit je einer Auflegefläche zum Auflegen einer der genannten Platten versehen sind und die zum Einstecken in das Gehäuse oder zum Herausnehmen der Platten aus demselben um je eine sich quer zu der Auflagefläche erstreckende Schwenkachse schwenkbar sind, wobei das Gehäuse mit Seitenwänden und sich parallel zu den Auflageflächen erstreckenden, mit einem freien Rand versehenen Trennwänden zum Führen und Unterstützen der Tragkörper versehen ist, wenn diese sich wenigstens teilweise innerhalb des Gehäuses befinden.

Eine derartige Kassette ist aus der europäischen Patentanmeldung 0.212.244 (durch Bezeichnung als hierin aufgenommen betrachtet) bekannt. Die bekannte Kassette hat ein rechteckiges Gehäuse mit sechs Tragkörpern, die mit je einer Auflagefläche für eine optische Platte versehen sind. Das Gehäuse hat zwei offene und zwei sich aneinander anschliessende, nahezu völlig geschlossene, gerade Seitenwände, sowie eine obere Wand und eine untere Wand. An einer der letztgenannten Seitenwände ist eine Schwenkvorrichtung mit einer Schwenkachse vorgesehen, um welche die Tragkörper zum Eingeben der optischen Platten in die Kassete bzw. zum Entfernen aus derselben parallel zu der Auflagefläche schwenkbar sind. Die beiden geschlossenen Seitenwände sind an der Innenseite mit relativ schmalen, dünnen Trennwänden versehen, die in etwa fünf sich parallel zu der oberen und unteren Wand erstreckenden Flächen vorgesehen sind und die zusammen mit der Ober- und Unterwand sechs Fächer bilden, in welche die genannten sechs Tragkörper passen. Die Kassette ist entworfen zum Aufbewahren optischer Platten mit einem Aussendurchmesser von 120 mm, der sog. Compact Discs (CDs oder CDVs) und bestimmt zum Zusammenarbeiten mit einem angepassten Plattenwechsler, von dem in der genannten europäischen Patentanmeldung eine Ausführungsform dargestellt ist.

Auf dem Gebiet optischer Platten war bis vor kurzem nur ein Plattentyp mit Audio-Information erhältlich, und zwar die obengenannte Compact Disc. Neulich wurde aber bekannt, dass eine kleinere Ausgabe der Compact Disc auf den Markt kommen wird mit einem Aussendurchmesser, der kleiner ist als der der normalen Compact Disc. Der neue Typ, auch als CD-Single oder Mini-CD bezeichnet, hat einen Aussendurchmesser von 80 mm. Durch das Aufkommen der neuen CD-Single entsteht in bezug auf die bekannte Kassette das Problem, dass die kleine optische Platte nicht passend in der bekannten Kassette aufbewahrt werden kann. Eine auf der Hand liegende Lösung für dieses Problem könnte sein, die Kassette derart zu verkleinern, dass sie sich zum Aufbewahren der kleineren optischen Platten eignet. Ein Nachteil dabei ist, dass eine derartige Kassette nicht in dem bekannten handelsüblichen Plattenwechsler verwendet werden kann. Eine andere Lösung, nämlich das Einhalten der Aussenabmessungen der bekannten Kassette, aber ausserdem das Verbreitern der Trennwände, weist den Nachteil auf, dass die Trennwände so breit werden, dass sie ihre Starrheit verlieren und dadurch als Leiter für die Tragkörper unzuverlässig sind. Ausserdem sind breite Trennwände aus fertigungstechnischen Gründen wenig interessant. Die Trennwände werden nämlich in einer Spritzgussvorrichtung hergestellt, wobei es wichtig ist, dass nach der Bildung der Trennwände die vorhandene Wärme schnell abgeführt werden kann. Bei breiten Trennwänden können jedoch in bezug auf die Wärmeabfuhr Schwierigkeiten entstehen, wodurch lange Zykluszeiten entstehen. Ausserdem können infolge einer unregelmässigen Wärmeabfuhr Massabweichungen auftreten.

Der Erfindung liegt u.a. die Aufgabe zugrunde, für das obengenannte Problem eine Lösung zu schaffen, wobei einerseits die Aussenabmessungen der bekannten Kassette beibehalten und andererseits die kleineren optischen Platten optimal in der Kassette aufbewahrt werden können. Die Erfindung weist dazu das Kennzeichen auf, dass an mindestens einer der Seitenwände ein einwärts vorspringender Wandteil vorhanden ist, auf dem eine Anzahl Trennwände befestigt ist.

Die Erfindung bietet die Möglichkeit, auf überraschende und äusserst einfache Art und Weise eine Kassette zu entwerfen, die dieselben guten Eigenschaften aufweist wie die bekannte Kassette, die aber statt der Aufbewahrung optischer Platten mit einem Aussendurchmesser von 120 mm zum Aufbewahren optischer Platten mit einem Aussendurchmesser von 80 mm geeignet ist und die ohne weiteres mit Plattenwechslern desjenigen Typs zusammenarbeiten kann, von dem eine Ausführungsform in der genannten europäischen Patentanmeldung dargestellt ist.

Eine bevorzugte Ausführungsform der erfindungsgemässen Kassette weist das Kennzeichen auf, dass die Tragkörper je an einer dem vorspringenden Wandteil gegenüberliegenden Seite mit einer Ausnehmung versehen sind, in der der vorspringende Wandteil steckt, wenn der betreffende Tragkörper sich inerhalb des Gehäuses befindet.

Diese Ausführungsform bietet den Vorteil, dass die Umrisse der Tragkörper an wesentlichen Stellen den Umrissen der Tragkörper der bekannten Kassette entsprechen, wodurch keine besonderen Massnahmen in bezug auf die Verwendbarkeit der erfindungsgemässen Kassette in dem genannten bekannten Plattenwechsler getroffen zu werden brauchen.

Eine äusserst stabile und solide bevorzugte Ausführungsform der erfindungsgemässen Kassette weist das Kennzeichen auf, dass die mit einem vorspringenden Wandteil versehene Seitenwand zusammen mit dem vorspringenden Wandteil eine Kammer bildet. Eine alternative Ausführungsform weist das Kennzeichen auf, dass der vorspringende Wandteil ein einwärts springender Teil der Seitenwand selbst ist.

Eine weitere bevorzugte Ausführungsform weist das Kennzeichen auf, dass die Ausnehmung in den Tragkörpern mehr oder weniger U-förmig ist. Aus fertigungs- und konstruktionstechnischen Gründen hat der in die Ausnehmung passende Wandteil vorzugsweise einen dem U-förmigen Querschnitt der Ausnehmung entsprechenden Verlauf.

Eine andere bevorzugte Ausführungsform, in der die in dem Gehäuse aufbewahrten optischen Platten auf zweckmässige Weise spielfrei aufbewahrt werden können, weist das Kennzeichen auf, dass auf dem zentralen Teil des vorspringenden Wandteils ein Polster, beispielsweise aus Schaumgummi, angebracht ist zum Zusammenarbeiten mit den Umfangsrändern der auf den Auflageflächen anzubringenden Platten, wenn die Tragkörper sich völlig innerhalb des Gehäuses befinden, wobei sich auf beiden Seiten des Polsters eine Anzahl Trennwände erstreckt.

Ein Ausführungsbeispiel der Erfindung ist in der Zeichnung dargestellt und wird im folgenden näher beschrieben. Es zeigen:

Fig. 1 eine schaubildliche Ansicht einer Ausführungsform der erfindungsgemässen Kassette mit nur einem ausgeschwenkten Tragkörper,

Fig. 2 eine schaubildliche Ansicht der Kassette nach Fig. 1 in einem zerlegten Zustand und

Fig. 3 eine Draufsicht einer Seitenwand der Kassette nach Fig. 1.

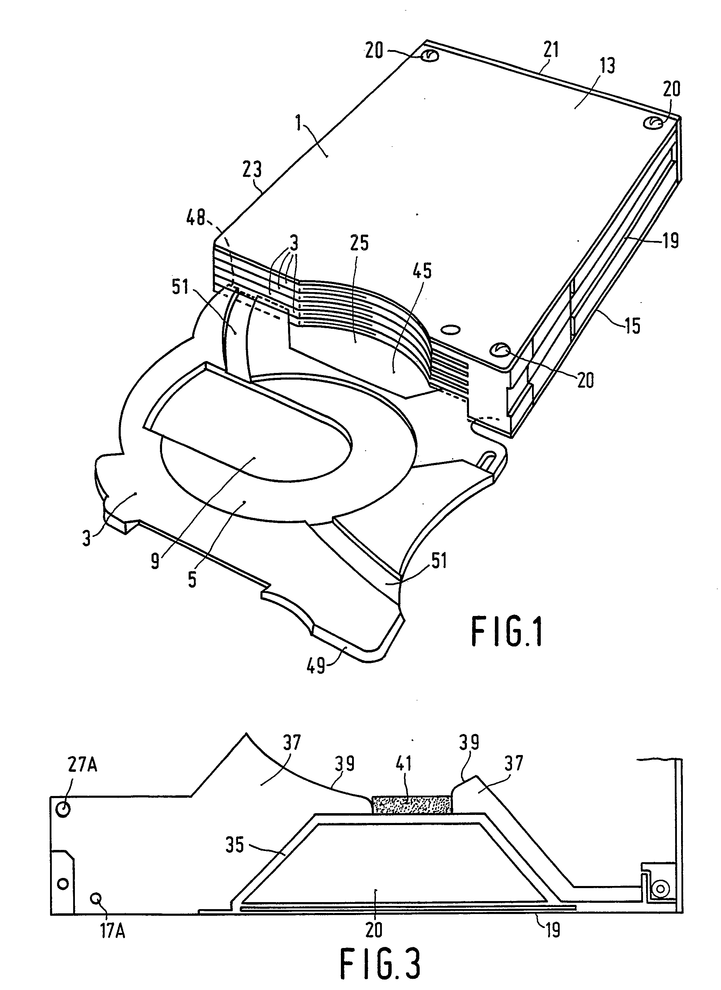

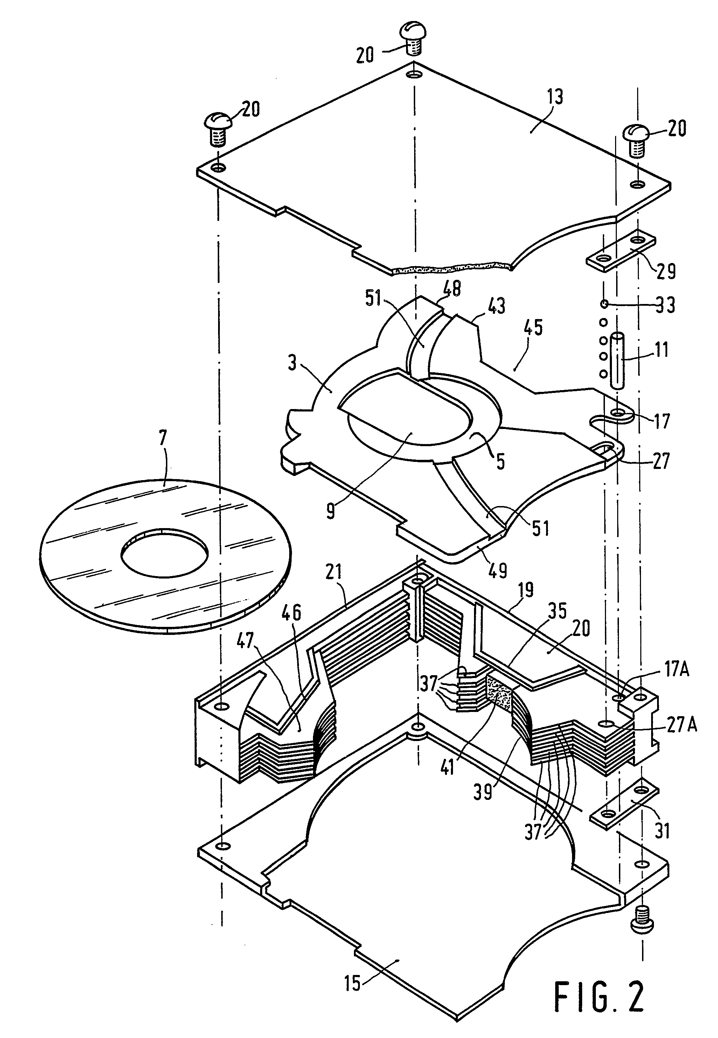

Die in den Fig. 1, 2 und 3 dargestellte erfindungsgemässe Kassette hat ein Gehäuse 1 und sechs schwenkbare Tragkörper 3. Die Tragkörper 3 sind einander im wesentlichen gleich; deswegen ist nur einer der Tragkörper 3 völlig dargestellt. Die Tragkörper 3 sind mit einem zentral liegenden Senkteil versehen, der eine Auflagefläche 5 zum Aufnehmen einer CD-Single 7 bildet. Die Auflagefläche 5 hat eine Zentralöffnung 9, damit die CD-Single zum optischen Abtasten der CD-Single in einem dazu geeigneten optischen Plattenspieler, wie dem aus der bereits genannten europäischen Patentanmeldung 0.212.244 bekannten Plattenspieler, zugänglich gemacht werden kann. Die Tragkörper 3 lassen sich durch Schwenkung um eine Schwenkachse 11 in und aus dem Gehäuse 1 bewegen. Die Schwenkachse 11 ist zwischen einem oberen Teil 13 und einem unteren Teil 15 des Gehäuses 1 befestigt und ragt durch Öffnungen 17 in den Tragkörpern 3. Das dosenförmige Gehäuse 1 hat ausser dem genannten oberen Teil 13 und den genannten unteren Teil 15 weiterhin eine völlig geschlossene und eine weitgehend geschlossene Seitenwand 21 bzw. 19, mit denen die Teile 13 und 15 mit Hilfe von Bolzen 20 verbunden sind, sowie zwei nahezu völlig offene Seiten 23 und 25. In der Seitenwand 19 befindet sich eine den Öffnungen 17 entsprechende Öffnung 17A, durch die hindurch die Achse 11 ragt. In einem geringen Abstand von der Öffnung 17A ist die Seitenwand 19 mit einer durchgehenden Öffnung 27A versehen, der eine in dem Tragkörper 3 vorgesehene Öffnung 27 entspricht. In den gemeinsamen Öffnungen 27 und 27A befindet sich eine Anzahl zwischen zwei federnden Platten 29 und 31 angebrachter Kugeln 33 zum Einrasten der in das Gehäuse 1 eingeführten Tragkörper 3. Für eine eingehende Beschreibung eines derartigen Einrastmechanismus sowie anderer zum guten Verständnis der Erfindung nicht relevanter Einzelheiten der Kassette sei auf die genannte europäische Patentanmeldung 0.212.244 verwiesen.

Die Seitenwand 19 der erfindungsgemässen Kassette ist mit einem mehr oder weniger U-förmigen Wandteil 35 sowie mit quer zu der Schwenkachse 11 liegenden, über fünf parallele Flächen verteilten dünnen lamellenartigen Trennwänden versehen. Die Trennwände 37 sind mit dem Wandteil 35 verbunden und haben an von dem Wandteil 35 abgewandten Teilen freie Ränder 39. Die Trennwände 37 bilden miteinander sowie mit dem oberen Teil 13 und dem unteren Teil 15 relativ untiefe Zwischenräume, in die Randteile der Tragkörper 3, ggf. mit CD-Singles 7 versehen, passend hineingeschoben werden können. Die Trennwände 37 sind derart bemessen, dass die ggf. auf den hineingeschobenen Tragkörpern 3 liegenden CD-Singles dabei über einen beschränkten Abstand zwischen die Trennwände 37 ragen. Die Lage und die Abmessungen des Wandteils 35 sind derart, dass die auf den Tragkörpern 3 liegenden optischen Platten an einem auf dem Wandteil 35 festgeklebten Schaumgummipolster 41 anliegen. Die Seitenwand 19 kann zusammen mit dem Wandteil 35 und den Trennwänden 37 im Spritzgussverfahren hergestellt werden, wobei zwischen dem Wandteil und dem Teil der Seitenwand 19 ein Hohlraum bzw. eine Kammer 20 gebildet wird. Ein auf diese Weise gebildeter Teil ist preisgünstig und weist äusserst solide, möglichst klein bemessene Trennwände auf.

Die Tragkörper 3 der erfindungsgemässen Kassette sind je an einer der Seitenwand 19 zugewandten Seite 43, in der eingeschobenen Lage gesehen, mit einer Ausnehmung 45 versehen. Die Ausnehmungen 45 haben eine einem Querschnitt des Wandteils 35 entsprechende Form und sind derart bemessen, dass, wenn die Tragkörper völlig in das Gehäuse 1 hineingeschoben sind, der Wandteil 35 genau in die Ausnehmungen 45 passt.

Die sich an die Seitenwand 19 anschliessende Seitenwand 21, die mit einer Schraubverbindung mit der Seitenwand 19 verbunden ist, ist mit Trennwänden 47 versehen, die sich in denselben Ebenen erstrecken wie die Trennwände 37 der Seitenwand 19. Die Seitenwand 21 ist auf ähnliche Weise wie die Seitenwand 19 zur Beschränkung der Breite der Trennwände 47 auf der Innenseite mit einem versprungenen Wandteil 46 versehen. In völlig eingeschobener Lage der Tragkörper 3 befinden sich die Tragkörper 3 und die ggf. darauf liegenden CD-Singles in den durch die Trennwände 37 sowie durch die Trennwände 47 gebildeten Zwischenräumen, wodurch eine genaue Positionierung der Tragkörper 3 sowie eine spielfreie Lagerung der CD-Singles in eingeschobener Lage gewährleistet ist. Ausserdem ist eine einwandfreie Führung der Tragkörper 3 beim Hinein- und Herausschieben der Tragkörper 3 durch die Trennwände 47 gewährleistet, wobei sogar in der ausgeschwenkten Lage der Tragkörper 3 eine Unterstützungsfläche 48 der Tragkörper 3 auf einer der Trennwände 47 ruhen kann.

Die Tragkörper 3 haben an den Seiten, die nicht mit den Seitenwänden 19 oder 21 zusammenarbeiten wenigstens örtlich dickere Segmente 49, die zusammen in der eingeschobenen Lage der Tragkörper 3 die offenen Seiten 23 und 25 wenigstens teilweise abdichten. Die Tragkörper 3 sind mit rillenförmigen gekrümmten Ausnehmungen 51 versehen, die sich von einer Seite des Tragkörpers 3 bis an die Auflagefläche 5 zum Auflegen einer CD-Single erstrecken. Diese gekrümmten Ausnehmungen 51 dienen zum Führen in der Zeichnung nicht dargestellter weicher Polsterelemente, die auf der Unterseite der Tragkörper vorgesehen sind und die dazu dienen, beim Ein- oder Ausschwenken der Tragkörper eine Beschädigung der auf den Tragkörpern liegenden CD-Singles zu vermeiden, sowie zum spielfreien Lagern der aufbewahrten CD-Singles.

Vollständigkeitshalber sei bemerkt, dass im Rahmen der Erfindung mehrere Ausführungsformen möglich sind. In diesem Zusammenhang wird die Möglichkeit genannt, unter Umständen an nur einer der Seitenwände 19 oder 21 der Kassette einen Wandteil 35 bzw. 46 anzubringen. Ausserdem ist die Form der Wandteile nicht auf die dargestellten Beispiele beschränkt.

## Ansprüche

1. Kassette Zum Aufbewahren mehrerer scheibenförmiger Platten, insbesondere optischer Platten, mit einem Gehäuse mit übereinander angeordneten plattenförmigen Tragkörpern, die mit je einer Auflagefläche zum Auflegen einer der genannten Platten versehen sind und die zum Einstecken in das Gehäuse oder zum Herausnehmen der Platten aus demselben um je eine sich quer zu der Auflagefläche erstreckende Schwenkachse schwenkbar sind, wobei das Gehäuse mit Seitenwänden und sich parallel zu den Auflageflächen erstreckenden, mit einem freien Rand versehenen Trennwänden zum Führen und Unterstützen der Tragkörper versehen ist, wenn diese sich wenigstens teilweise innerhalb des Gehäuses befinden, **dadurch gekennzeicrhnet**, dass an mindestens einer der Seitenwände ein einwärts vorspringender Wandteil vorhanden ist, auf dem eine Anzahl Trennwände befestigt ist.

2. Kassette nach Anspruch 1, **dadurch gekennzeichnet**, dass die Tragkörper je an einer dem genannten Wandteil gegenüberliegenden Seite mit einer Ausnehmung versehen sind, in die der Wandteil ragt, wenn der betreffende Tragkörper sich innerhalb des Gehäuses befindet.

3. Kassette nach Anspruch 1 oder 2, **dadurch gekennzeichnet**, dass die mit einem vorspringenden Wandteil versehene Seitenwand zusammen mit dem vorspringenden Wandteil eine Kammer bildet.

4. Kassette nach Anspruch 1, **dadurch gekennzeichnet**, dass der vorspringende Wandteil ein einwärts springender Teil der Seitenwand selbst ist.

5. Kassette nach Anspruch 2, **dadurch gekennzeichnet**, dass die Ausnehmung mehr oder weniger U-förmig ist.

6. Kassette nach einem der vorstehenden Ansprüche, **dadurch gekennzeichnet**, dass auf dem zentralen Teil des vorspringenden Wandteils ein Polster angebracht ist zum Zusammenarbeiten mit den Umfangsrändern der auf den Auflageflächen anzubringenden scheibenförmigen Platten, wenn die Tragkörper sich völlig innerhalb des Gehäuses befinden, wobei sich auf beiden Seiten des Polsters eine Anzahl Trennwände erstreckt.

FIG.1

FIG.3

FIG. 2

2-Ⅱ- PHN 12435

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 160 349 (SONY) <br> * Seite 3, Zeilen 50-103; Figuren 1,2 * <br> --- | 1 | G 11 B 23/03 <br> G 11 B 17/22 |
| A | FR-A-2 578 676 (PIONEER) <br> * Seite 29, Zeile 5 - Seite 32, Zeile 34; Figuren 24-29 * <br> --- | 1 | |
| A | DE-U-8 705 509 (R. WARE) <br> * Anspruch; Figuren * <br> --- | 1,6 | |
| D,A | EP-A-0 212 244 (PIONEER) <br> --- | | |
| A | EP-A-0 217 393 (PIONEER) <br> --- | | |
| A | EP-A-0 240 926 (PIONEER) <br> ----- | | |

| | |
|---|---|
| | RECHERCHIERTE SACHGEBIETE (Int. Cl.4) |
| | G 11 B <br> B 65 D |

Der vorliegende Recherchenbericht wurde für alle Patentansprüche erstellt

| Recherchenort | Abschlußdatum der Recherche | Prüfer |
|---|---|---|
| DEN HAAG | 12-05-1989 | DECLAT M.G. |